# EUROPÄISCHE PATENTSCHRIFT

(11) **EP 2 130 652 B1**
(45) Veröffentlichungstag und Bekanntmachung des Hinweises auf die Patenterteilung: **14.09.2011**
(21) Anmeldenummer: 08010192.6
(22) Anmeldetag: 04.06.2008
(51) Int. Cl.: B25D 17/20, B25D 16/00, B01D 45/06, B23Q 11/10

(54) **Elektrowerkzeug mit Getriebeentlüftung**
Electrical tool with gear ventilation
Outil électrique doté d'une ventilation d'embrayage

(43) Veröffentlichungstag der Anmeldung: 09.12.2009
(73) Patentinhaber: AEG Electric Tools GmbH, 71364 Winnenden (DE)
(72) Erfinder: Robieu, Thomas, 71409 Schwaikheim (DE)
(74) Vertreter: Bernhard, Uwe

(56) Entgegenhaltungen:
- EP-A- 1 252 976
- EP-A- 1 655 110
- DE-A1- 2 709 616
- DE-A1- 19 628 946
- DE-U1-202004 019 045
- US-A- 4 611 670

## Beschreibung

Die vorliegende Erfindung betrifft ein Elektrowerkzeug gemäß dem Oberbegriff des Anspruchs 1, insbesondere einen Bohr- oder Meißelhammer, umfassend ein geschmiertes in einem, insbesondere luftdicht, abgedichteten Getrieberaum angeordnetes Getriebe, wobei der Getrieberaum über einen Entlüftungskanal in Fluidverbindung mit der Atmosphäre steht, und ein in dem Entlüftungskanal angeordnetes, luftdurchgängiges Dichtelement. Ein solches Elektrowerkzeug ist aus der DE 19 628 946 A bekannt.

Ein derartiges Elektrowerkzeug ist beispielsweise auch aus der EP 1 252 976 A1 bekannt, wobei der Getrieberaum über einen engen Kanal sowie einen sich an diesen Kanal anschließenden Filter zur Atmosphäre hin offen ist. Bei dem Filterelement kann es sich beispielsweise um einen Filz handeln.

Ist das Getriebe mit Öl oder ölartigem Schmiermittel geschmiert, besteht die Gefahr, dass sich der Filz durch Kapillarwirkung mit Öl vollsaugt und das Getriebe nach kurzer Zeit undicht wird (Ölverlust durch Kapillarwirkung). Ein ähnliches Problem ergibt sich auch bei der Verwendung von Fett oder fettartigem Schmiermittel. Hier arbeitet der Filz ähnlich einem Sieb und trennt das Fett in seinen Komponenten. Dabei wird das Basisöl vom Filz durch Kapillarwirkung aufgesaugt, wohingegen die Seifen aus dem Fett auf der Oberfläche des Filzes kleben bleiben und eine dicke Schicht bilden. Diese Schicht dichtet den Filz ab, so dass zwar ein weiterer Verlust an Schmiermittel verhindert wird, jedoch gleichzeitig auch keine Entlüftung des Getriebegehäuses mehr gewährleistet ist. Die Entlüftung ist jedoch notwendig, weil der Luftdruck innerhalb des Getriebegehäuses des Bohr- oder Meißelhammers aufgrund von Temperaturänderungen sowie dem Betrieb des Schlagwerks kontinuierlichen Schwankungen unterliegt und ein Druckausgleich mit der Atmosphäre vorgesehen werden muss.

Angesichts der obigen Ausführungen beruht die Aufgabe der vorliegenden Erfindung darauf ein Elektrowerkzeug der eingangs genannten Art derart weiterzubilden, dass eine sicherere und dauerhafte Entlüftung im Wesentlichen ohne Schmiermittelverlust gewährleistet werden kann.

Diese Aufgabe wird durch die Merkmale des Patentanspruchs 1 gelöst. Vorteilhafte Weiterbildungen der vorliegenden Erfindung sind in den Unteransprüchen genannt.

Der Erfindung liegt der Gedanke zu Grunde in dem Weg bzw. Kanal den die Luft zum Druckausgleich des Getrieberaums zur Atmosphäre nimmt ein labyrinthartiges Dichtelement vorzusehen, das eine Luftzirkulation bei über- oder Unterdruck im Getrieberaum gestattet, ohne dass das Schmiermittel durch Kapillarwirkung aus dem Getriebe treten kann, in dem der Weg vom Getrieberaum nach außen verlängert wird.

Dementsprechend umfasst ein erfindungsgemäßes Elektrowerkzeug, bei dem es sich insbesondere um einen Bohr- oder Meißelhammer handelt, ein geschmiertes in einem, insbesondere im Wesentlichen luftdicht, abgedichteten Getrieberaum angeordnetes Getriebe, wobei oder Getrieberaum über einen Entlüftungskanal in Fluidverbindung mit der Atmosphäre steht und ein in dem Entlüftungskanal angeordnetes, luftdurchgängiges Dichtelement, das eine Luftzirkulation bei Ober- oder Unterdruck im Getrieberaum zwischen der Atmosphäre und dem Getrieberaum gestattet. Dieses Dichtelement ist erfindungsgemäß derart ausgebildet, dass es den Entlüftungskanal labyrinthartig verlängert, so dass die Luftzirkulation weiter möglicht ist, jedoch ein Schmiermitteldurchtritt aus dem Getrieberaum an dem Dichtelement vorbei hin zur Atmosphäre verhindert ist.

Weiterhin ist das Dichtelement derart ausgestaltet, dass es eine dem Getrieberaum zugewandte Mündungsöffnung aufweist, d. h. eine Öffnung, die sich direkt oder indirekt in den Getrieberaum öffnet. Ferner sind hier zwei sich von der Mündungsöffnung fortsetzende Strömungskanäle vorgesehen, so dass die beispielsweise bei Überdruck aus dem Getrieberaum ausströmende Luft in die Mündungsöffnung einströmen und von dort aus in die zwei getrennten Strömungskanäle in unterschiedliche Richtungen strömen kann. Dies ist insbesondere zur Vermeidung eines Schmiermittelstaus, z. B. eines Fettstaus sinnvoll. Im Falle eines Fettstaus in der Mündungsöffnung wird bei einer Überdrucksituation das angesammelte Fett aus der Mündungsöffnung in nur einen der beiden Strömungskanäle gedrückt, so dass stets ein Strömungskanal zur Durchströmung mit Luft verbleibt. Dies trägt zu einer zuverlässigen und sicheren Entlüftung bei.

Zweckmäßigerweise kann das Dichtelement aus Gummi oder einem gummiartigen Werkstoff gebildet sein.

Gemäß einer besonders bevorzugten Ausführungsform umfasst der Entlüftungskanal eine Öffnung, die in den Getrieberaum mündet, wobei es hier bevorzugt ist, dass das Dichtelement im Wesentlichen unmittelbar an die Öffnung anschließt. Dadurch wird ein Austritt von Schmiermittel aus dem Getrieberaum im Wesentlichen verhindert, ohne dass zusätzliche Elemente oder aufwändige Konstruktionen erfolgen müssen, um andere Bereiche des Entlüftungskanals gegenüber einem Schmiermitteldurchtritt abzudichten.

Eine besonders kostengünstige und platzsparende Konstruktion kann erzielt werden, wenn das Elektrowerkzeug ein Schaltelement, vorzugsweise einen Getriebeumschalter aufweist, wobei das Schaltelement vorzugsweise einen in den Getrieberaum ragenden Stutzen aufweist, indem der Entlüftungskanal mit dem Dichtelement ausgebildet ist. Ein derartiges Schaltelement ist zum Betrieb des Elektrowerkzeugs von außen bedienbar, um ein Bauteil im Inneren des Elektrowerkzeugs zu schalten. Daher stellt ein solches Schaltelement eine Schnittstelle zwischen dem Inneren des Elektrowerkzeugs und der Umgebung und damit der Atmosphäre dar. Diese Schnittstelle kann als undichte Stelle ausgestaltet werden und platzsparend sowie kostengünstig zur Bildung des Entlüftungskanals genutzt werden. Besonders bevorzugt ist dabei ein Getriebeumschalter. Dieser kann beispielsweise dazu genutzt werden zwischen einem Bohrhammermodus und einem Meißelhammermodus umzuschalten oder aber zwischen einem reinen Bohrmodus und einem Bohrhammermodus. Dabei kann eine mechanische Verbindung zwischen dem Schaltelement und einem oder mehreren Getriebeelementen bestehen. D. h. es besteht eine Verbindung zwischen dem Umschalter und dem Getrieberaum, so dass zur Bildung des Entlüftungskanals im Wesentlichen keine zusätzlichen Elemente vorgesehen werden müssen.

Ferner ist es bevorzugt, dass das Dichtelement wenigstens eine, vorzugsweise aber mehrere Etagen aufweist, die sich jeweils aus mindestens einer (bevorzugt nur einer) in die jeweilige Etage mündenden Mündungsöffnung und zwei sich von der Mündungsöffnung fortsetzenden Strömungskanälen zusammensetzen. Durch diese Anordnung mehrere hintereinander geschalteter Etagen, die derart ausgestaltet sind, wird der zuvor erwähnte Vorteil hinsichtlich der Vermeidung eines Fettstaus und einer sicheren und zuverlässigen Entlüftung gewährleistet und andererseits verhindert, dass das Schmiermittel (angesammeltes Fett) den Weg bis zu einem Austritt aus dem Elektrowerkzeug findet.

Vorteilhafterweise kann das Dichtelement, das, wie bereits erwähnt, aus Gummi oder einem gummiartigen Werkstoff hergestellt sein kann, gegossen, insbesondere spritzgegossen werden. Um die oben erwähnte Ausgestaltung aus Mündungsöffnungen und sich fortsetzenden Strömungskanälen mit der Anordnung in mehreren Etagen auf einfachste Art und Weise und bei niedrigen Herstellungskosten zu realisieren, ist es daher bevorzugt, dass das Dichtelement mehrere in Richtung des Entlüftungskanals hintereinander angeordnete Nuten aufweist. D. h. das Dichtelement weist mehrere senkrecht zu einer Längsachse des Entlüftungskanals umlaufende und in Längsrichtung des Entlüftungskanals beabstandete Nuten auf. Diese Nuten bilden jeweils die erwähnten Strömungskanäle und sind durch senkrecht zur Längsrichtung des Entlüftungskanals umlaufende und in Längsrichtung des Strömungskanals beabstandete Wände getrennt. Diese Wände weisen jeweils eine, vorzugsweise nur eine, die Mündungsöffnung bildende Durchbrechung auf. Dabei ist die Wand vollständig von einer Seite zur anderen in Längsrichtung des Entlüftungskanals durchbrochen, so dass die Durchbrechung eine Verbindung zwischen zwei in Längsrichtung des Entlüftungskanals benachbarten Nuten bzw. Strömungskanälen entsteht. Diese Durchbrechungen sind abwechselnd auf entgegengesetzten Seiten, z. B. einer Vorder- und einer Rückseite, des Dichtelements vorgesehen, so dass eine geradlinige Strömung von einer Durchbrechung in die nächste nicht möglicht ist. Hier ist es auch denkbar, dass die Durchbrechungen bzw. Mündungsöffnungen nicht mittig in den Wänden und auf der entsprechenden Seite, sondern auf beliebige Art und Weise versetzt in den Wänden angeordnet sind.

Darüber hinaus ist es bevorzugt, dass die wande umfänglich gegen den Entlüftungskanal im Wesentlichen luftdicht abdichten, so dass weder ein Schmiermittelfluss noch ein Luftfluss zwischen der Oberfläche der Wände und der Innenfläche des Entlüftungskanals am Dichtelement vorbei gestattet ist. Um dies zu erreichen, kann es bevorzugt sein auf den Wände eine mit Ausnahme der Unterbrechungen umlaufende Dichtlippe oder aber mehrere Dichtlippen, die parallel angeordnet sind, vorzusehen.

Weitere Vorteile und Merkmale der vorliegenden Erfindung, die alleinstehend oder in Kombination in einem Elektrowerkzeug gemäß der vorliegenden Erfindung zum Einsatz kommen können, sind aus der folgenden Beschreibung einer bevorzugten Ausführungsform, die unter Bezugnahme auf die begleitenden Zeichnungen erfolgt, ersichtlich.

In den Zeichnungen zeigt:
Fig. 1 eine Seitenansicht eines erfindungsgemäßen Elektrowerkzeugs, das im Bereich des Entlüftungskanals mit dem Dichtelement aufgebrochen ist;
Fig. 2 eine Vergrößerung des Entlüftungskanals mit dem darin angeordneten Dichtelement entsprechend der Darstellung aus Fig. 1 in Fig. 2a von vorne, Fig. 2b von einer Seite und in Fig. 2c von hinten; sowie
Fig. 3 eine perspektivische Ansicht nur des Dichtelements aus den Fig. 1 und 2.

Bei dem dargestellten Elektrowerkzeug handelt es sich um einen Bohr- und Meißelhammer mit einem nicht sichtbaren Elektromotor als Antriebseinheit, der über ein nicht sichtbares bzw. dargestelltes Getriebe ein Bohr- oder Meißelhammerfunktion bietet. Dabei kann über einen Getriebeumschalter 20 zwischen einem Bohrhammer und einem Meißelhammerbetrieb umgeschaltet werden. Der Getriebeumschalter bewirkt dabei durch eine mechanische Verbindung mit dem Getriebe entweder die Übertragung der Drehbewegung des Elektromotors auf das Bohrfutter (Bohrhammerbetrieb) oder ein entsprechendes Herausnehmen dieser rotatorischen Bewegung (Meißelhammermodus). Die mechanische Verbindung bzw. Umschaltung des Getriebes ist für die vorliegende Erfindung unerheblich und wird daher nicht genauer erläutert. Das Getriebe ist in einem Getriebegehäuse aufgenommen, das sich bei der dargestellten Ausführungsform aus einem Gehäusekörper 21 und einem Deckel 22 zusammensetzt. In dem Gehäuse 21, 22 ist ein Getrieberaum 23 gebildet, der das im vorliegenden Fall ölgeschmierte und nicht dargestellte Getriebe aufnimmt. Aufgrund von Temperaturänderungen während des Betriebs sowie der Schlagfunktion des Schlagwerks entstehen im Betrieb des Elektrowerkzeugs im Getrieberaum 23 Druckschwankungen. D. h. es kann ein Über- oder ein Unterdruck entstehen, der zur Atmosphäre hin auszugleichen ist. Zu diesem Zweck weist der Getriebeumschalter 20 einen Stutzen 24 auf, der in einer Aussparung 25 des Getriebegehäusedeckels 22 sitzt und gleichzeitig über nicht sichtbare Rastverbindungen an dem Getriebegehäusedeckel 22 drehbar fixiert ist.

Die Schnittstelle zwischen der Außenfläche des Stutzen 24 und der Innenfläche der Öffnung 25 ist dabei im Wesentlichen dicht (gegenüber dem Schmiermittel und Luft) ausgestaltet. Ferner umfasst der Getriebeumschalter 20 ein Handhabungselement 27, das zum Betätigen des Getriebeumschalters 20 greifbar ist. Dem Getriebegehäusedeckel 22 zugewandt, ist in diesem Handhabungselement 27 ein Hohlraum 28 vorgesehen, der durch eine Vertiefung in dem Handhabungselement 27 gebildet und durch eine Fläche des Getriebegehäusedeckels 22 abgeschlossen ist. Hier ist jedoch ein Luftdurchtritt zwischen dem Getriebegehäusedeckel 22 bzw. dessen Außenfläche und der Auflagefläche des den Raum 28 umschließenden Handhabungselements 27 gegeben. Darüber hinaus ist in dem Stutzen 24 ein Entlüftungskanal 26 vorgesehen, der über eine Verbindungsbohrung 29 mit dem Raum 28 in Verbindung steht. Der Entlüftungskanal 26 weist eine Öffnung 30 auf, die in den Getrieberaum 23 mündet. Durch die Fluidverbindung zwischen dem Raum 28 und der Atmosphäre über die Schnittstelle zwischen dem Handhabungselement 27 und der Außenfläche des Getriebegehäusedeckels 22, besteht daher über den Raum 28, die Bohrung 29 und den Entlüftungskanals 26 eine Fluidverbindung zwischen der Atmosphäre und dem Getrieberaum 23.

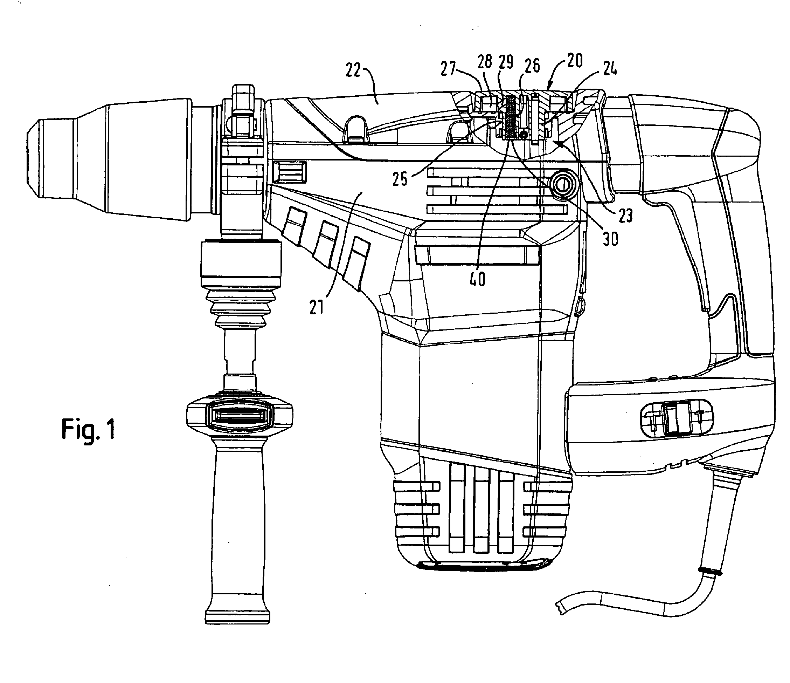

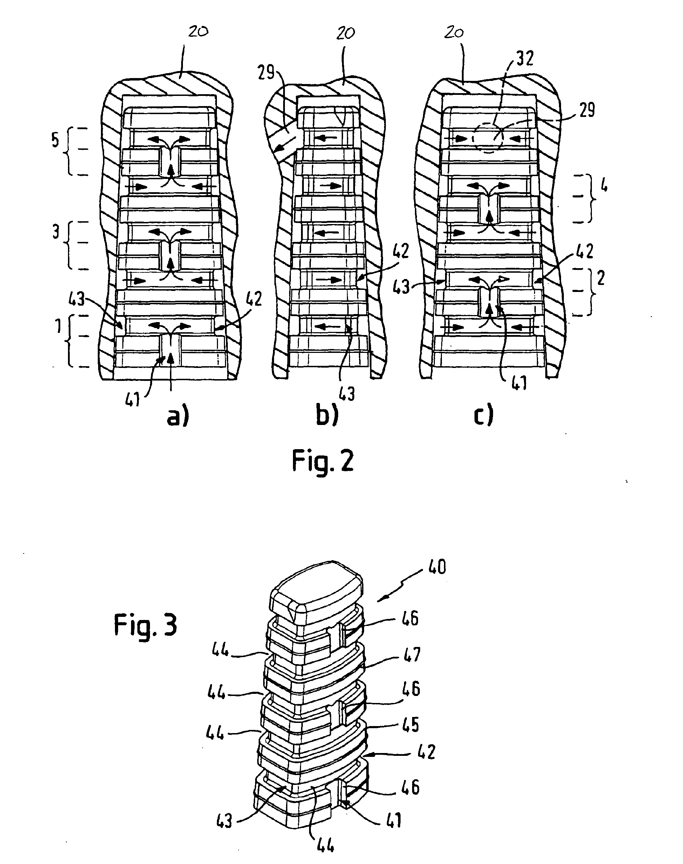

In dem Entlüftungskanal 26 sitzt im Wesentlichen unmittelbar an die Öffnung 30 anschließend ein Dichtelement 40, das unter Bezugnahme auf Fig. 3 im Folgenden näher erläutert wird. Das Dichtelement 40 ist vorzugsweise aus Gummi oder gummiartigem Werkstoff hergestellt und insbesondere gegossen, z. B. spritzgegossen. Es verjüngt sich von einem der Öffnung 30 zugewandten Ende zu seinem entgegengesetzten Ende hin und der in den Fig. 1 und 2 dargestellte Entlüftungskanal 26 ist gleicher Art, d. h. sich von der Öffnung 30 weg verjüngend ausgestaltet. Dies ist insbesondere durch den Getriebeumschalter 20 vorgegeben, bei dem es sich um ein Spritzgussteil handelt, so dass die verjüngende Form der Aussparung, welche den Entlüftungskanal 26 bildet zum Entformen notwendig ist. Das Dichtelement sitzt kraftschlüssig in dem Entlüftungskanal, so dass keine zusätzliche Befestigung erforderlich ist.

An dem breiteren Ende weist das Dichtelement 40 eine Mündungsöffnung 41 auf. Im montierten Zustand ist diese Mündungsöffnung 41 auf der der Öffnung 30 und damit dem Getrieberaum 23 zugewandten Seite des Dichtelements 40 angeordnet. Von dieser Mündungsöffnung 41 setzen sich zwei Strömungskanäle 42 und 43 fort.

Das Dichtelement 40 der dargestellten Ausführungsform umfasst ferner fünf Etagen 1-5 (siehe Fig. 2), die sich jeweils aus einer Mündungsöffnung 41 und den zwei sich von der Mündungsöffnung 41 fortsetzenden Strömungskanälen 42, 43 zusammensetzen.

Gebildet ist das Dichtelement 40 durch mehrere die Strömungskanäle 42, 43 bildende senkrecht zur Längsrichtung des Dichtelements 40 umlaufende Nuten 44. Die Nuten 44 sind in Längsrichtung des Dichtelements 40 voneinander beabstandet und durch Wände 45 voneinander getrennt. Die Wände sind senkrecht zur Längsrichtung des Dichtelements 40 umlaufend ausgestaltet und weisen jeweils eine Durchbrechung 46 in Längsrichtung auf. Die Durchbrechung der Wände ist derart gestaltet, dass sie jeweils zwei der Nuten 44 verbinden. Die am nächsten zum Getrieberaum 23, d. h. am stärkeren Ende des Dichtelements 40 vorgesehen Durchbrechung 46 verbindet die erste Nut 44 über die Öffnung 30 mit dem Getrieberaum 23 und ist daher die dem Getrieberaum zugewandte Mündungsöffnung. Wie insbesondere aus den Fig. 2a und c ersichtlich ist, sind die Durchbrechungen 46 benachbarter Wände 45 jeweils diametral gegenüberliegend auf entgegengesetzten Seiten des Dichtelements 40 vorgesehen. Die Durchbrechungen 46 müssen jedoch nicht unbedingt diametral gegenüberliegen, d. h. um 180° versetzt, auf benachbarten Wänden 45 angeordnet werden, sondern können auch anderweitig versetzt angeordnet sein.

Darüber hinaus ist mit Ausnahme der Durchbrechungen 46 umlaufend auf der Oberfläche der Wände 45 wenigstens eine Dichtlippe 47 vorgesehen, die die Wände 45 umfänglich gegen die Innenwand des Entlüftungskanals 26 abdichtet, so dass ein Luft- wie auch Schmiermitteldurchtritt, zwischen den Außenflächen der Wände 45 und der Innenfläche des Entlüftungskanals 26 verhindert wird.

Im Folgenden wird unter Bezugnahme auf insbesondere die Fig. 2a-c die Funktionsweise der Entlüftung gemäß der vorliegenden Erfindung erläutert. Diese Erläuterung erfolgt bei einem im Getrieberaum 23 vorherrschenden Überdruck und ist bei einem entsprechenden Unterdruck entsprechend umgekehrt. Bei einem Überdruck im Getrieberaum 23 strömt Luft im Getrieberaum 23 in die Öffnung 30 des Entlüftungskanals 26 und von dort in die am nächsten zur Öffnung 30 gelegene Mündungsöffnung 41 an einem Ende des Dichtelements 40. Wie durch die Pfeile in Fig. 2a angedeutet, teilt sich die einströmende Luft nach verlassen der Mündungsöffnung 41 in die zwei Strömungskanäle 42, 43 auf und strömt in die Mündungsöffnung 41 der zweiten Etage 2 und von dort wiederum in zwei senkrecht zur Längsrichtung des Entlüftungskanals 26 bzw. des Dichtelements 40 verlaufende Strömungskanäle 42, 43. Von dort wiederum in die Mündungsöffnung 41 der dritten Etage und die zugehörigen Strömungskanäle 42, 43. Dies wiederholt sich in der vierten Etage bis die Luft in die Mündungsöffnung 41 der fünften Etage und von dort in die zugehörigen Strömungskanäle 42, 43 strömt, die sich im Bereich einer Öffnung 32, die in die Bohrung 29 führt, treffen, so dass die Luft durch die Bohrung 29 in den Raum 28 und von dort aus in die Atmosphäre entweichen kann. Dadurch ist ein Druckausgleich zwischen dem Getrieberaum 23 und der Atmosphäre gewährleistet. Durch den erheblich längeren Strömungsweg der Luft durch das mittels der Mündungsöffnungen 41 und der Strömungskanäle 42, 43 in den verschiedenen Etagen und durch die versetzte Anordnung der Mündungsöffnung 41 auf Vorder- und Rückseite geschaffene Labyrinth wird ein Schmiermittelaustritt bzw. ein Eintritt in die Bohrung 29 den Raum 28 und von dort aus dem Gehäuse des Elektrowerkzeugs verhindert.

Sollte sich beispielsweise bei einer Fettschmierung eine Fettansammlung in der Mündungsöffnung am nächsten zum Getrieberaum 23 bilden, so würde diese bei weiterem Überdruck ggf. die Mündungsöffnung 41 in Richtung der Atmosphäre verlassen und auch ggf. in einen der beiden Strömungskanäle 42 bzw. 43 eintreten. Selbst in einem solchen Fall würde jedoch noch immer der zweite Strömungskanal zur Entlüftung verbleiben und die Luft kann noch immer über diesen Strömungskanal von der Mündungsöffnung 41 der ersten Etage zur Mündungsöffnung 41 der zweiten Etage und von dort weiter über die dritte bis fünfte Etage, die Bohrung 29 und den Raum 28 hin zur Atmosphäre entweichen, so dass für eine sichere und zuverlässige Entlüftung gesorgt ist, ohne dass ein Schmiermittel austritt durch Kapillarwirkung die Folge ist.

Das erfindungsgemäße Dichtelement bietet daher zahlreiche Vorteile. Zum einen ist es kostengünstig herstellbar. Zum anderen ist die Platzierung und Ausgestaltung in dem Getriebeumschalter platzsparend und ohne die Integration oder Implementierung weiterer Elemente oder Ausgestaltungen leicht realisierbar. Ohne diese Vorteile jedoch aufgeben zu müssen schafft das Dichtelement der vorliegenden Erfindung eine sichere und zuverlässige Entlüftung ohne das Risiko eines Schmiermittelaustritts und damit das kostengünstige und platzsparende Ersetzen des bekannten Filters als Dichtelement.

Es versteht sich jedoch, dass die vorliegende Erfindung nicht auf die dargestellte Ausführungsform beschränkt ist, sondern verschiedenartige Modifikationen im Umfang wie er durch die Patentansprüche vorgegeben ist, erfolgen können. Beispielsweise müssen die Nuten 44 und damit die Strömungskanäle 42, 43 nicht zwangsläufig und unbedingt rechtwinklig zur Längserstreckung des Entlüftungskanals 26 und/oder des Dichtelements 40 verlaufen, sondern können auch geneigt dazu ausgebildet sein oder sich aus längs- und querverlaufenden Elementen bzw. Abschnitten zusammensetzen. Auch müssen die durch die Durchbrechungen 46 gebildeten Mündungsöffnungen 41 nicht zwingend in Längsrichtung verlaufen, sondern können ebenfalls geneigt ausgebildet sein. Wie bereits erwähnt, müssen die Durchbrechung 41 auch nicht zwangslaufig diametral gegenüberliegend auf unterschiedlichen Seiten und abwechselnd in den Wänden 45 vorgesehen sein, sondern können verschiedenartig versetzt ausgebildet werden. Ferner kann auf die Ausgestaltung der Dichtlippen 47 verzichtet werden, wenn die Oberflächen der Wände 45 entsprechend gut mit der Innenfläche des Strömungskanals 26 abdichten, wobei dies jedoch eine schwierigere Montage (höherer Kraftaufwand) zur Folge hätte und kleinere Toleranzen einzuhalten wären. Schließlich muss der Entlüftungskanal nicht zwingend in einem Schaltelement integriert sein und/oder das Dichtelement in dem Entlüftungskanal des Schaltelements sitzen. Beispielsweise wäre es auch denkbar in dem Getriebegehäusedeckel 22 einen entsprechenden Stutzen der in den Getrieberaum 23 mündet und mit der Atmosphäre in Verbindung steht, vorzusehen, in dem dann der Entlüftungskanal mit Dichtelement vorgesehen wäre. Auch muss das Getriebe nicht zwingend ölgeschmiert sein, sondern es könnte auch eine Fettschmierung und/oder ein anderes ölartiges oder fettartiges Schmiermittel oder ein beliebiges anderes Schmiermittel zum Einsatz kommen. Darüber hinaus sind dem Fachmann weitere Modifikationen ersichtlich, die die Implementierung der vorliegenden Erfindung ermöglichen.

## Patentansprüche

1. Elektrowerkzeug, insbesondere Bohr- und/oder Meißelhammer, umfassend ein geschmiertes in einem abgedichteten Getrieberaum (23) angeordnetes Getriebe, wobei der Getrieberaum (23) über einen Entlüftungskanal (26) in Fluidverbindung mit der Atmosphäre steht, und ein in dem Entlüftungskanal (26) angeordnetes, luftdurchgängiges Dichtelement (40), das den Entlüftungskanal (26) labyrinthartig verlängert, so dass ein Schmiermitteldurchtritt durch das Dichtelement (40) verhindert ist, **dadurch gekennzeichnet, dass** das Dichtelement (40) auf der dem Getrieberaum (23) zugewandten Seite eine Mündungsöffnung (41) und zwei sich von der Mündungsöffnung (41) fortsetzende Strömungskanäle (42, 43) aufweist.

2. Elektrowerkzeug nach Anspruch 1, bei dem sich das Dichtelement (40) im Wesentlichen unmittelbar an eine Öffnung (30) des Entlüftungskanals (26) in den Getrieberaum (23) anschließt.

3. Elektrowerkzeug nach Anspruch 1 oder 2, ferner umfassend ein Schaltelement (20), vorzugsweise einen Getriebeumschalter, mit einem in den Getrieberaum (23) ragenden Stutzen (24) in dem der Entlüftungskanal (26) mit dem Dichtelement (40) ausgebildet ist.

4. Elektrowerkzeug nach einem der vorstehenden Ansprüche, bei dem das Dichtelement (40) wenigstens eine, vorzugsweise mehrere Etagen (1-5) aufweist, die jeweils eine in die jeweilige Etage (1-5) mündende Mündungsöffnung (41) und zwei sich von der Mündungsöffnung fortsetzende Strömungskanäle (42, 43) umfasst.

5. Elektrowerkzeug nach Anspruch 4, bei dem das Dichtelement (40) mehrere in Längsrichtung des Entlüftungskanals (26) hintereinander angeordnete Nuten (44) aufweist, die jeweils die Strömungskanäle (42, 43) bilden und in den die Nuten (44) trennenden Wänden (45) jeweils eine die Mündungsöffnungen (41) bildende Durchbrechung (46) ausgebildet ist, wobei die Durchbrechungen (46) abwechselnd auf entgegengesetzten Seiten des Dichtelements (40) vorgesehen sind.

6. Elektrowerkzeug nach Anspruch 5, bei dem die Wände (45) umfänglich gegen den Entlüftungskanal (26) im Wesentlichen luftdicht abdichten.

7. Elektrowerkzeug nach Anspruch 6, bei dem zum umfänglichen abdichten eine umlaufende Dichtlippe (47) auf den Wänden (45) angeordnet ist.

## Claims

1. A power tool, particularly a drill and/or chisel hammer, comprising a lubricated gearbox arranged in a sealed gearbox compartment (23), wherein the gearbox compartment (23) is in fluid communication with the atmosphere via a breather channel (26), and an air-permeable sealing element (40) arranged inside the breather channel (26) that prolongs the breather channel (26) in labyrinthine manner, so that lubricating medium is prevented from penetrating via the sealing element (40), **characterized in that** the side of the sealing element (40) facing towards the gearbox compartment (23) is furnished with a flow-through opening (41) and two flow channels (42, 43) that extend outward from the flow-through opening (41).

2. The power tool as recited in claim 1, in which the sealing element (40) is essentially adjacent to an opening (30) of the breather channel (26) into the gearbox compartment (23).

3. The power tool as recited in either of claims 1 or 2, further comprising a switching element (20), preferably a gearbox toggle switch with a nozzle (24) that protrudes into the gearbox compartment (23), in which the breather channel (26) with the sealing element (40) is conformed.

4. The power tool as recited in any of the preceding claims, in which the sealing element (40) has at least one, preferably multiple stage (1-5), each of which comprises a flow-through opening (41) that opens into the respective stage (1-5) and two flow channels (42, 43) that extend outward from the flow-through opening.

5. The power tool as recited in claim 4, in which the sealing element (40) is furnished with a plurality of grooves (44) arranged one behind the other in the lengthwise direction of the breather channel (26), which grooves together form the flow channels (42, 43) and a breakthrough (46) forming each flow-through opening (41) is conformed in the walls (45) that separate the grooves (44), wherein the breakthroughs (46) are provided in alternating arrangement on opposite sides of the sealing element (40).

6. The power tool as recited in claim 5, in which the walls (45) create an essentially airtight seal against the breather channel (26) about the circumference.

7. The power tool as recited in claim 6, in which a sealing lip (47) extending circumferentially is arranged on the walls (45) to create a circumferential seal.

## Revendications

1. Outil électrique, en particulier marteau perforateur et/ou marteau burineur, comprenant une transmission lubrifiée et disposée dans une chambre de transmission (23) étanchéifiée, la chambre de transmission (23) étant en liaison fluidique avec l'atmosphère au moyen d'un canal de purge (26), et un élément d'étanchéité (40) disposé dans le canal de purge (26) et laissant passer l'air, qui prolonge le canal de purge (26) à la façon d'un labyrinthe, de sorte qu'une traversée de lubrifiant dans l'élément d'étanchéité (40) est empêchée, **caractérisé en ce que** l'élément d'étanchéité (40) présente sur le côté tourné vers la chambre de transmission (23) un orifice d'embouchure (41) et deux canaux d'écoulement (42, 43) se prolongeant à partir de l'orifice d'embouchure (41).

2. Outil électrique selon la revendication 1, sur lequel l'élément d'étanchéité (40) se raccorde sensiblement directement à un orifice (30) du canal de purge (26) dans la chambre de transmission (23).

3. Outil électrique selon la revendication 1 ou 2, comprenant également un élément de commutation (20), de préférence un inverseur de transmission, avec une tubulure (24) dépassant dans la chambre de transmission (23), dans laquelle est conçu le canal de purge (26) avec l'élément d'étanchéité (40).

4. Outil électrique selon l'une quelconque des revendications précédentes, sur lequel l'élément d'étanchéité (40) présente au moins un, de préférence plusieurs étages (1-5), lesquels comprennent chacun un orifice d'embouchure (41) débouchant dans l'étage (1-5) concerné et deux canaux d'écoulement (42, 43) se prolongeant à partir de l'orifice d'embouchure.

5. Outil électrique selon la revendication 4, sur lequel l'élément d'étanchéité (40) présente plusieurs rainures (44) disposées les unes derrière les autres dans le sens longitudinal du canal de purge (26), lesquelles rainures forment respectivement les canaux d'écoulement (42, 43) et à chaque fois un percement (46) formant les orifices d'embouchure (41) est conçu dans les parois (45) séparant les rainures (44), les percements (46) étant prévus alternativement sur des côtés opposés de l'élément d'étanchéité (40).

6. Outil électrique selon la revendication 5, sur lequel les parois (45) assurent l'étanchéité sensiblement hermétique sur le pourtour par rapport au canal de purge (26).

7. Outil électrique selon la revendication 6, sur lequel, pour l'étanchéité périphérique, une lèvre d'étanchéité (47) périphérique est disposée sur les parois (45).
